# EUROPÄISCHE PATENTSCHRIFT

(11) **EP 3 212 436 B1**
(45) Veröffentlichungstag und Bekanntmachung des Hinweises auf die Patenterteilung: **04.07.2018**
(21) Anmeldenummer: 15745177.4
(22) Anmeldetag: 27.07.2015
(51) Int. Cl.: B60B 17/00

(54) **SCHIENENRAD UND SCHIENENFAHRZEUG**
RAIL WHEEL AND RAIL VEHICLE
ROUE FERROVIAIRE ET VÉHICULE FERROVIAIRE

(30) Priorität: 29.10.2014 DE 102014222072
(43) Veröffentlichungstag der Anmeldung: 06.09.2017
(73) Patentinhaber: ContiTech Luftfedersysteme GmbH, 30165 Hannover (DE)
(72) Erfinder: GEDENK, Volker, 30966 Hemmingen (DE)
(74) Vertreter: Kilsch, Armin Ralph
(86) Internationale Anmeldenummer: PCT/EP2015/067094
(87) Internationale Veröffentlichungsnummer: WO 2016/066289

(56) Entgegenhaltungen:
- WO-A1-2014/020203
- JP-A- 2003 039 904
- US-A- 2 532 319

## Beschreibung

Die Erfindung betrifft ein Schienenrad aufweisend einen ringförmigen Radreifen, einen koaxial zum Radreifen angeordneten, zylindrischen Radkörper, der eine Achsnabe aufweist, und einen ringförmigen Federkörper, der sich in Radialrichtung des Schienenrads unter einer Vorspannung zwischen dem Radreifen und dem Radkörper erstreckt, um den Radreifen federnd auf dem Radkörper abzustützen.

Die Erfindung betrifft außerdem ein Schienenfahrzeug aufweisend ein als Fahrwerk dienendes Gestell mit mindestens einer Achse und daran drehbar gelagerten Schienenrädern.

Schienenräder sind grundsätzlich aus dem Stand der Technik bekannt. Beispielhaft wird hierzu die Offenlegungsschrift DE 197 43 893 A1 genannt. Ein Schienenrad weist einen Radkörper, einen Federkörper und einen Radreifen auf. Der Radkörper umfasst eine Achsennabe, die auch als Radnabe bezeichnet wird. Mit der Achsennabe kann der Radkörper drehbar gelagert an einer Achse befestigt werden. Zusätzlich zu der Achsennabe kann der Radkörper einen Felgenring und eine sich zwischen der Achsennabe und dem Felgenring erstreckende Radscheibe aufweisen. Der Radkörper kann einteilig oder mehrteilig ausgebildet sein. Vorzugsweise ist der Radkörper einteilig ausgestaltet, so dass die Achsennabe, die Radscheibe und der Felgenring in diesem Fall integral ausgebildet sind. Der Radkörper bildet radial außenseitig, insbesondere mit dem Felgenring, eine Außenwandung für den Kontakt zu dem ringförmigen Federkörper. Der Federkörper ist deshalb radial außenseitig zu dem Radkörper angeordnet. Außerdem können der Federkörper und der Radkörper koaxial zueinander angeordnet sein. Der Federkörper erstreckt sich in Radialrichtung des Schienenrads von dem Radkörper bis zu dem Radreifen, vorzugsweise bis zu seiner radial innenseitigen Innenwanderung des Radreifens. Der Radreifen kann radial außenseitig eine kreisrundere Lauffläche sowie einen radial nach außen ragenden Spurkranz aufweisen.

Der Radreifen und der Radkörper, insbesondere der zugehörige Felgenring, sind vorzugsweise aus Metall. Vorteilhaft haben sich hierbei Stahl oder Aluminiumslegierungen erwiesen. Damit können der Radreifen und/oder der Radkörper den im Betrieb auftretenden hohen Belastungen besonders gut standhalten. Der Radreifen und der Radkörper weisen in Radialrichtung eine besonders hohe Steifigkeit auf. Um Unebenheiten einer Schiene möglichst nur gedämpft an eine Achse eines Schienenfahrzeugs zu übertragen, dient der Federkörper zur Federung und/oder Dämpfung. Treten zwischen dem Radreifen und dem Radkörper besonders hohe Kräfte und/oder relative Bewegungen auf, können diese mittels des Federkörpers gedämpft werden. Als vorteilhaft haben sich Federkörper aus oder mit einem Elastomer erwiesen. Der Federkörper kann als GummiFederkörper ausgebildet sein. Der Federkörper kann darüber hinaus Verstärkungselemente umfassen.

Insbesondere in Kurvenfahrten können Querkräfte auf das Schienenrads wirken. Deshalb können die Außenwanderung des Radkörpers und die Innenwanderung des Radreifens eine zueinander korrespondierende Kontur aufweisen. Hierbei hat es sich bewährt, wenn die Innenwanderung des Radreifens eine ringförmige, konkave Nut und die Außenwanderung des Radkörpers eine ringförmige, konvexe Erhebung aufweist. Zwischen dem Radkörper und dem Radreifen entsteht auf diese Weise ein im Querschnitt etwa V-förmiger Ringspalt, in den der Federkörper eingebracht ist. Durch die erläuterte Ausgestaltung der Außenwanderung des Radkörpers und der Innenwanderung des Radreifens wird eine besonders hohe Steifigkeit in Axialrichtung gewährleistet.

Um eine ausreichend hohe Steifigkeit in Radialrichtung des Schienenrads zu gewährleisten, erstreckt sich der Federkörper unter Vorspannung zwischen dem Radkörper bzw. zwischen dem Federkörper und dem Radreifen. Der Federkörper ist zur Drehmomentübertragung deshalb ebenfalls vorgespannt auszubilden. Mit einer steigenden Anforderung an das zu übertragende Drehmoment ist die Vorspannung des Federkörpers zu erhöhen. Dies führt jedoch zu einer Steigerung der effektiven Steifigkeit in Radialrichtung des Schienenrads. Mit steigender Steifigkeit in Radialrichtung sinkt der Komfort des Schienenrads, da Vibrationen und/oder Erschütterungen des Radreifens weniger gedämpft an den Radkörper übertragen werden.

Die US 2,532,319 offenbart ein Rad für Schienenfahrzeuge, bei dem ein äußerer und ein innerer, jeweils mit Speichen versehener, gegossener Radring vorgesehen sind, wobei die beiden Radringe durch ein elastisches Material miteinander verbunden sind.

Die JP 2003 039904 A offenbart ein ebenfalls aus Radreifen und Radkörper bestehendes Rad für Schienenfahrzeuge, wobei Radreifen und Radkörper mit Hilfe eines elastischen Zwischenradkörpers verschraubt sind.

Die WO 2014/020203 A1 offenbart ein Eisenbahnrad, bei dem der äußere Radreifen und der innenliegende Radkörper über einen V-förmigen elastischen Ring miteinander verbunden sind.

Die Aufgabe der Erfindung ist die Bereitstellung eines Schienenrads, das zur Übertragung von hohen Drehmomenten zwischen dem Radkörper und dem Radreifen ausgebildet ist, wobei der Federkörper des Schienenrads eine möglichst gute Dämpfung in Radialrichtung bietet.

Gemäß einem ersten Aspekt wird die Aufgabe durch das erfindungsgemäße Schienenrad gelöst, aufweisend einen ringförmigen Radreifen, einen koaxial zum Radreifen angeordneten, zylindrischen Radkörper, der eine Achsnabe aufweist, und einen ringförmigen Federkörper, der sich in Radialrichtung des Schienenrads unter einer Vorspannung zwischen dem Radreifen und dem Radkörper erstreckt, um den Radreifen federnd auf dem Radkörper abzustützen, wobei der Federkörper an zumindest einer seiner axialen Stirnseiten in Axialrichtung des Schienenrads hervorspringende Stege aufweist, der Radreifen und/oder der Radkörper mindestens einen sich in Radialrichtung erstreckenden Kragen aufweist, an dem die genannte Stirnseite des Federkörpers anliegt, wobei der oder jeder Kragen an seiner dem Federkörper zugewandten, axialen Stirnseite Nuten aufweist, die jeweils von zwei in Umfangsrichtung des Schienenrads gegenüber angeordneten Anlageflächen begrenzt sind, und die Stege in die Nuten fassen, um eine formschlüssige Verbindung auszubilden.

Der Erfindung liegt der Gedanke zu Grunde, die Dämpfung des Schienenrads durch eine Verringerung der Steifigkeit in Radialrichtung des Schienenrads zu erhöhen, indem die Radialsteifigkeit des Federkörpers und/oder die Vorspannung des Federkörpers zwischen dem Radkörper und dem Radreifen verringert wird bzw. verringert werden kann. Dies erhöht den Komfort eines Schienenfahrzeugs, bei dem derartige Schienenräder eingesetzt werden. Mit der Verringerung der Radialsteifigkeit des Federkörpers bzw. der Vorspannung des Federkörpers sinkt das Drehmoment, das durch einen Kraftschluss zwischen dem Federkörper und dem Radkörper bzw. dem Radreifen übertragbar ist. Um dennoch das gewünschte Drehmoment mittels des Federkörpers zwischen dem Radkörper und dem Radreifen übertragen zu können, weist der Federkörper an zumindest einer seiner axialen Stirnseiten Stege auf, die jeweils in Axialrichtung des Schienenrads hervorspringen. Diese Stege dienen nicht zur Kraftübertragung in Radialrichtung zwischen dem Radkörper und dem Radreifen, da sie über die axialen Stirnseiten hinausragen. Die Steifigkeit in Radialrichtung des Schienenrads wird durch die Stege deshalb nicht beeinflusst. Die Stege des Federkörpers dienen jedoch zur Drehmomentübertragung. Für diese Drehmomentübertragung weisen der Radreifen und/oder der Radkörper mindestens einen sich in Radialrichtung erstreckenden Kragen auf. Trotz des mindestens einen Kragens sind der Radreifen und der Radkörper in Radialrichtung voneinander beanstandet, so dass der Federkörper weiterhin dämpfend wirken kann. Dazu kann der jeweilige Kragen an einer axial äußeren Stirnseite des Radkörpers bzw. des Radreifens angeordnet sein. Ein dem Radkörper zugeordneter Kragen kann sich dabei in Radialrichtung zu dem Radreifen hin erstrecken. Alternativ oder ergänzend kann sich ein dem Radreifen zugeordneter Kragen zu dem Radkörper hin erstrecken. An jedem Kragen liegt eine Stirnseite des Federkörpers an, von der mehrere Stege hervorspringen. Diese Stege fassen in die Nuten. Dazu weist der jeweilige Kragen an seiner dem Federkörper zugewandten, axialen Stirnseite mehrere Nuten auf, in die die zuvor genannten Stege einfassen, um eine formschlüssige Verbindung auszubilden. Jede Nut ist dazu von zwei in Umfangsrichtung des Schienenrads gegenüber angeordneten Anlageflächen begrenzt. Jeder Steg, der in eine Nut einfasst, liegt deshalb an den Anlageflächen der jeweiligen Nut an, so dass ein Drehmoment, also eine in Umfangsrichtung des Schienenrads wirkende Kraft, von dem Steg über die Anlagefläche der Nut übertragbar ist. Deshalb kann mittels des Federkörpers ein Drehmoment zwischen dem Radkörper und dem Reifen übertragen werden.

Mit der erfindungsgemäßen Ausgestaltung des Schienenrads ist es möglich, sowohl die Steifigkeit und/oder die Vorspannung des Federkörpers in Radialrichtung zu verringern, um die Dämpfung des Schienenrads zu erhöhen, was bei einem Einsatz für ein Schienenfahrzeug einen höheren Komfort bietet, und zugleich die für Schienenräder oftmals notwendige Übertragbarkeit von hohen Drehmomenten zu gewährleisten.

Eine bevorzugte Ausgestaltung des Schienenrads zeichnet sich dadurch aus, dass die Stege einen integralen Teil des Federkörpers bilden. In der Praxis wurde festgestellt, dass der Steg einer Biegung um eine Achse in Axialrichtung ausgesetzt sein kann. Diese Biegung kann verringert werden, indem der Steg integral mit dem übrigen Federkörper ausgebildet ist. Es lassen sich deshalb höhere Drehmomente zwischen dem Radkörper und dem Radreifen übertragen.

Eine weitere bevorzugte Ausgestaltung des Schienenrads zeichnet sich dadurch aus, dass der Federkörper zwischen seinen in Axialrichtung gegenüber angeordneten Stirnseiten kreisringförmig ausgestaltet ist. Da die Stege und die Nuten nunmehr zur Übertragung eines Drehmoments zwischen dem Radkörper und dem Radreifen beitragen, kann der übrige Federkörper ausgebildet sein, um bei einem Einsatz des Schienenrads in ein Schienenfahrzeug einen höheren Komfort zu bieten. Indem der Federkörper zwischen die genannten Stirnseiten kreisringförmig ausgebildet ist, weist der Federkörper in diesem Bereich in Umfangsrichtung einen zumindest im Wesentlichen gleichen Querschnitt auf. Die Steifigkeit des Schienenrads in Radialrichtung ist deshalb über den Umfang betrachtete zumindest im Wesentlichen gleich. Damit bietet das Schienenrad sowohl bei niedriger Belastung als auch bei hoher Belastung eine besonders hohe Laufruhe und drehwinkelunabhängige Dämpfungseigenschaften. Mit anderen Worten wird durch den Federkörper selbst auch im Betrieb mit höheren radialen Lasten keine störende Schwingung angeregt.

Eine weitere bevorzugte Ausgestaltung des Schienenrads zeichnet sich dadurch aus, dass die Stege in Umfangsrichtung des Schienenrads voneinander beabstandet sind. Grundsätzlich sind für den Federkörper mehrere Stege vorgesehen. Damit jeder der Stege in eine Nut einfassen kann, sind diese in Umfangsrichtung voneinander beanstandet. Besonders bevorzugt sind die Stege gleichmäßig über den Umfang des Federkörpers verteilt. Dies verbessert die Aufteilung des zu übertragenden Drehmoments auf die Stege.

Eine weitere bevorzugte Ausgestaltung des Schienenrads zeichnet sich dadurch aus, dass der Federkörper in Umfangsrichtung des Schienenrads segmentiert ist, wobei jedem Segment des Federkörpers einer der Stege zugeordnet ist. Der Federkörper kann also mehrteilig ausgestaltet sein. Jedes der Teile des Federkörpers bildet einen Ringabschnitt des ringförmigen Federkörpers. Dabei können die Ringabschnitte in Umfangsrichtung voneinander beanstandet sein. Trotz dieser Beabstandung wird der Federkörper als ringförmige Einheit angesehen. Die einzelnen Ringabschnitte des Federkörpers können Segmente des Federkörpers bilden, so dass der Federkörper segmentiert ist. In der Praxis hat es sich als vorteilhaft erwiesen, wenn jedes Segment zur Drehmomentübertragung zwischen dem Radkörper und dem Radreifen beiträgt, um eine möglichst gleichmäßige, auf den Federkörper wirkende Kraftverteilung in Umfangsrichtung zu erreichen. Mit anderen Worten wird durch die Ausgestaltung eines jeden Segments mit einem Steg erreicht, dass jedes Segment mit einem Drehmoment beaufschlagt wird, so dass eine Überbelastung eines einzelnen Segments durch ein zu übertragendes Drehmoment effektiv verhindert werden kann.

Eine weitere bevorzugte Ausgestaltung des Schienenrads zeichnet sich dadurch aus, dass der Federkörper an zwei gegenüber angeordneten, axialen Stirnseiten Stege aufweist, die jeweils in Axialrichtung des Schienenrads hervorspringen. Die beiden Stege ragen deshalb von den Stirnseiten in entgegengesetzter axialer Richtung nach außen. Korrespondierend zu den Stegen können der Radreifen und/oder der Radkörper mindestens zwei sich in Radialrichtung erstreckende Kragen aufweisen. Dabei sind die Kragen an gegenüberliegenden, axialen Stirnseiten des Radkörpers bzw. des Radreifens angeordnet. Somit können die Stege des Federkörpers in axial gegenüberliegende Nuten der Kragen einfassen. Dies gewährleistet eine Übertragung eines Drehmoments zwischen dem Radkörper und dem Radreifen, bei der die entsprechenden Kräfte symmetrisch in den Federkörper eingeleitet werden können. Eine derartige Drehmomentübertragung gewährleistet eine besonders hohe Lebensdauer des Federkörpers.

Eine weitere bevorzugte Ausgestaltung des Schienenrads zeichnet sich dadurch aus, dass der Federkörper spiegelsymmetrisch zu einer Radialebene des Schienenrads ausgestaltet ist. Die Radialebene wird dabei durch zwei winkelig zu einander angeordnete Achsen aufgespannt, die jeweils in Radialrichtung zeigen. Durch die symmetrische Ausgestaltung zu der Radialebene wird der Federkörper in Axialrichtung betrachtet besonders gleichmäßig beansprucht, was zu einer höheren Lebensdauer des Federkörpers beiträgt. Außerdem gewährleistet die symmetrische Ausgestaltung eine besonders hohe Achsstabilität. So bleiben der Radkörper, der Federkörper und der Radreifen auch bei einer Übertragung von höheren Drehmoments zwischen dem Radkörper und dem Radreifen mittels des Federkörpers zumindest im Wesentlichen koaxial zueinander angeordnet.

Eine weitere bevorzugte Ausgestaltung des Schienenrads zeichnet sich dadurch aus, dass die Stege und die Nuten durch in Umfangsrichtung unstetige Konturen ausgebildet sind. So kann jeder Steg und/oder jede Nut im Querschnitt mehreckig, insbesondere quadratisch, rechteckig oder trapezförmig ausgestaltet sein. Durch die Flächen zwischen den Ecken können definierte Flächen bestimmt sein, die besonders vorteilhaft zur Kraftübertragung in Umfangsrichtung ausgestaltet sind.

Eine weitere bevorzugte Ausgestaltung des Schienenrads zeichnet sich dadurch aus, dass die Stege und die Nuten durch in Umfangsrichtung stetige Konturen ausgebildet sind. Eine derartige Ausgestaltung der Stege und Nuten erleichtert die Herstellung des Schienenrads.

Gemäß einem weiteren Aspekt wird die eingangs genannte Aufgabe außerdem durch ein Schienenfahrzeug gelöst, aufweisend ein als Fahrwerk dienendes Gestell mit mindestens einer Achse und daran drehbar gelagerten, erfindungsgemäßen Schienenrädern. Dabei gelten Merkmale, Details und Vorteile, die im Zusammenhang mit dem erfindungsgemäßen Schienenrad beschrieben sind, selbstverständlich auch im Zusammenhang mit dem erfindungsgemäßen Schienenfahrzeug und jeweils umgekehrt, so dass bezüglich der Offenbarung zu den einzelnen Erfindungsaspekten stets wechselseitig Bezug genommen wird beziehungsweise werden kann.

Die Erfindung wird nachstehend ohne Beschränkung des allgemeinen Erfindungsgedankens anhand von Ausführungsbeispielen unter Bezugnahme auf die Zeichnungen beschrieben. In den Zeichnungen zeigen:
- Fig. 1: eine schematische Seitendarstellung eine Schienenrads,
- Fig. 2: eine schematische Schnittdarstellung des Schienenrads auf Fig. 1 entlang eines Schnitts B-B,
- Fig. 3: eine schematisch Querschnittdarstellung eines halben Schienenrads,
- Fig. 4: eine schematische, perspektivische Ansicht eines Segments des Federkörpers in einer ersten Ausgestaltungsvariante,
- Fig. 5: eine schematische, perspektivische Ansicht eines Segments des Federkörpers in einer zweiten Ausgestaltungsvariante,
- Fig. 6: eine schematische, perspektivische Ansicht eines Segments des Federkörpers in einer dritten Ausgestaltungsvariante, und
- Fig. 7: eine schematische, perspektivische Ansicht eines Segments des Federkörpers in einer vierten Ausgestaltungsvariante.

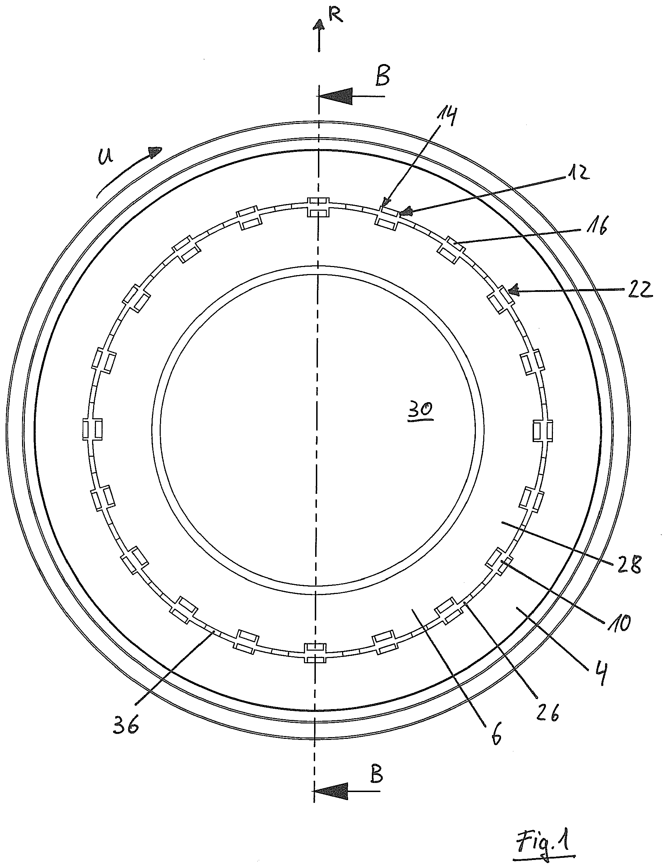

In der Figur 1 ist das erfindungsgemäße Schienenrad 2 in einer schematischen Seitenansicht wiedergegeben. Das Schienenrad 2 umfasst den radial außenseitig angeordneten, ringförmigen Radreifen 4. Radial innenseitige dazu ist der zylindrische Radkörper 6 angeordnet. Da der Radreifen 4 und der Radkörper 6 koaxial zueinander angeordnet sind, bildet sich zwischen dem Radreifen 4 und dem Radkörper 6 ein Ringspalt. In den Ringspalt ist der Federkörper 10 eingebracht. Der Federkörper 10 dient zur Übertragung von Kräften in Radialrichtung R sowie zur Übertragung von Drehmomenten.

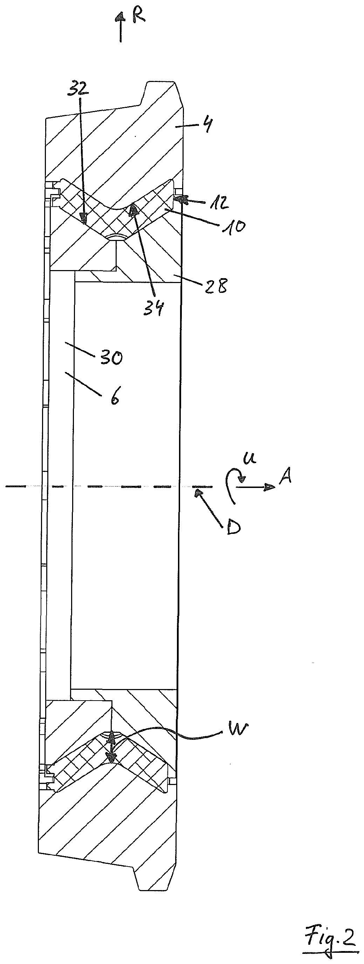

Die Figur 2 zeigt das Schienenrad 2 aus der Figur 1 in einer Schnittdarstellung entlang des Schnittes B-B. Die folgenden Erläuterungen beziehen sich deshalb auf die Zusammenschau der Figuren 1 und 2. In der Praxis hat es sich als vorteilhaft erwiesen, wenn der Federkörper 10 im Querschnitt V-förmig ausgestaltet ist. Um den Federkörper 10 zwischen dem Radkörper 6 und dem Radreifen 4 anordnen zu können, ist der Radkörper 6 bevorzugt mehrteilig ausgebildet. So ist die Radfelge 28, die einen Teil des Radkörpers 6 bildet, beispielsweise mindestens zweiteilig ausgebildet, wobei jeder der beiden Teile ringförmig ist. Die beiden Teile können radial außenseitig keilförmig ausgebildet sein, so dass bei einem Zusammenbringen der beiden Teile der Radfelge 28 eine radial außenseitige Kontur gebildet wird, die zu der V-förmigen Ausgestaltung des Federkörpers 10 korrespondiert. Einen weiteren Teil des Radkörpers 6 bildet die Radscheibe 30, die sich von der Radfelge 28 radial nach innen erstreckt.

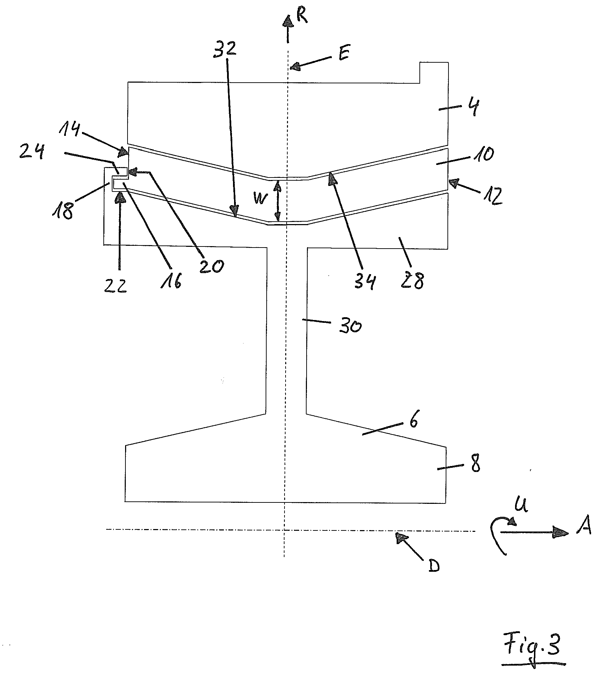

Aus der Fig. 3 ist eine weitere Ausgestaltung des erfindungsgemäßen Schienenrads 2 zu erkennen. Dabei zeigt die Figur 3 einen oberen Teil eines Querschnitts des erfindungsgemäßen Schienenrads 2. Da das Schienenrad 2 bevorzugt symmetrisch zu der Drehachse D des Schienenrads 2 bzw. einer Achsennabe 8 des Radkörpers 6 ist, kann auf die Darstellung des unteren Teils des Querschnitt des Schienenrads 2 verzichtet werden. Das Schienenrad 2 weist den Radkörper 6, den Radreifen 4 und den sich zwischen dem Radkörper 6 und dem Radreifen 4 in Radialrichtung R erstreckenden Federkörper 10 auf. Der Federkörper 10 ist in Radialrichtung R vorgespannt, um den Radreifen 4 zu dem Radkörper 6 zu positionieren. Der Radkörper 6, der Federkörper 10 und der Radreifen 4 sind koaxial, und zwar vorzugsweise mit der gemeinsamen Drehachse D, zueinander angeordnet. Dazu sind der Radreifen 4 und der Federkörper 10 jeweils ringförmig ausgestaltet. In den von dem Radreifen 4 gebildeten zylindrischen Hohlraum ist der Radkörper 6 eingebracht, so dass sich zwischen dem Radkörper 6 und dem Radreifen 4 der genannte Ringspalt bildet, in den der Federkörper 10 eingebracht ist, um die genannte Positionierung zu gewährleisten.

Die Achsnabe 8 bildet einen radial innenseitigen Abschnitt des Radkörpers 6. Radial außenseitig wird ein Abschnitt des Radkörpers 6 von der sogenannten Radfelge 28 gebildet. Zwischen der Radfelge 28 und der Radnabe 8 erstreckt sich die sogenannte Radscheibe 30 des Radkörpers 6.

Der Federkörper 10 ist, wie aus den Figuren 2 und 3 entnehmbar, im Querschnitt vorzugsweise V-förmig ausgestaltet. Korrespondierend zu der V-förmigen Ausgestaltung des Federkörpers 10 ist eine radial außenseitige Wanderung 32 des Radkörpers 6 konkav und eine radial innenseitige Wandung 34 des Radreifens 4 konvex ausgestaltet. Durch die genannte Ausgestaltung der Wandungen 32, 34 und des V-förmigen Querschnitts des Federkörpers 10 weist das Schienenrad 2 eine ausreichend hohe Steifigkeit in Axialrichtung A auf.

Die folgenden Erläuterungen gelten sowohl für das Schienenrad 2, wie es aus der Figur 3 hervorgeht, als auch in analoger Weise für das Schienenrad 2, wie es aus der Zusammenschau der Figuren 1 und 2 hervorgeht.

Um eine möglichst gute Dämpfung des Schienenrads 2 zu erreichen, kann die Vorspannung des Federkörpers 10 verkleinert und/oder die Steifigkeit des Federkörpers 10 in Radialrichtung R möglichst klein und/oder die Wandstärke W des Federkörpers 10 in Radialrichtung R möglichst groß ausgestaltet sein. Die genannten Möglichkeiten zur Erhöhung der Dämpfung des Schienenrads 2 haben jedoch zur Folge, dass die Kraft in Radialrichtung R zwischen dem Federkörper 10 und dem Radkörper 6 bzw. dem Radreifen 4 sinkt. Damit verringert sich auch die in Umfangsrichtung U übertragbare Kraft zwischen dem Federkörper 10 und dem Radkörper 6 bzw. dem Radreifen 4, da sich an der Grenzfläche des Federkörpers 10 zu dem Radkörper 6 bzw. dem Radreifen 4 eine jeweils kraftschlüssige Verbindung ausbildet. Mit anderen Worten singt das zwischen dem Radkörper 6 und dem Radreifen 4 übertragbare Drehmoment mittels des Federkörpers 10, wenn die Dämpfung des Schienenrads 2 erhöht werden soll.

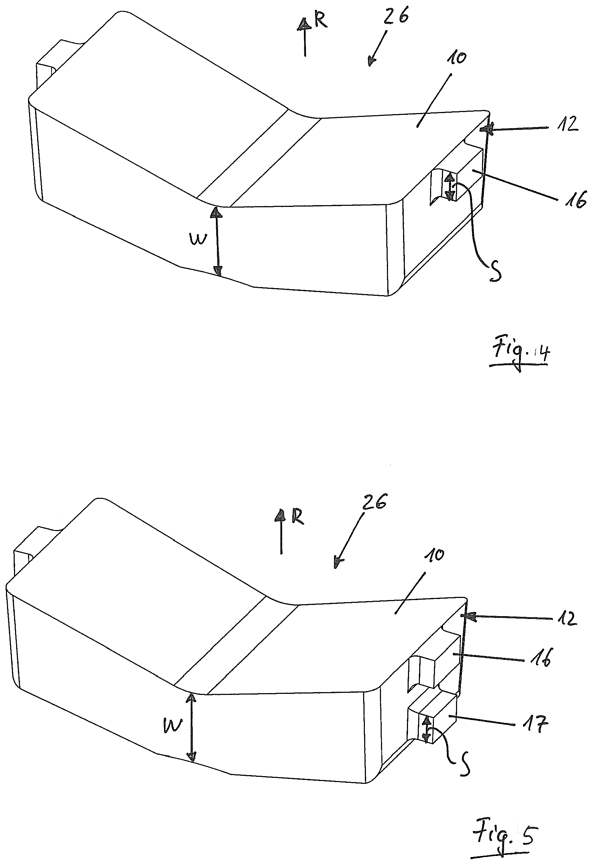

Um die gewünschte Drehmomentübertragung trotz Erhöhung der Dämpfung des Schienenrads 2 zu gewährleisten, sind erfindungsgemäß an zumindest einer axialen Stirnseite 12, 14 des Federkörpers 10 in Axialrichtung A des Schienenrads 2 hervorspringende Stege 16 vorgesehen. Dabei hat es sich in der Praxis für die Montage des Schienenrads 2 als vorteilhaft erwiesen, wenn der Federkörper 10 in Umfangsrichtung U des Schienenrads 2 segmentiert ist. Ein entsprechendes Segment 26 des Federkörpers 10 ist in Figur 4 dargestellt. Werden mehrere derartige Segmente 26 hintereinander zu einem Ring angeordnet, bilden die mehreren Segmente 26 den ringförmigen Federkörper 10. Jedem Segment 26 oder mehreren der Segmente 26 des Federkörpers 10 kann ein Steg 16 zugeordnet sein, der jeweils zur Drehmomentübertragung dient.

Wird der Federkörper 10, wie in der Figur 1 dargestellt, durch mehrere in Umfangsrichtung U verteilte Segmente 26 des Federkörpers 10, vorzugsweise mit jeweils zwischen den Segmenten 26 angeordneten Pufferabschnitten 36 gebildet, kann jedes Segment 26 zu der mindestens einen Stirnseite 12, 14 mindestens einen Steg 16 aufweisen. Wie aus der Fig. 5 zu entnehmen ist, ist es bevorzugt vorgesehen, dass an der mindestens einen Stirnseite 12, 14 zwei Stege 16, 17 vorgesehen sind. Die Stege 16, 17 weisen vorzugsweise jeweils eine geringere Erstreckung in Umfangsrichtung U als das jeweils zugehörige Segment 26 auf. Mit anderen Worten ist es vorgesehen, dass die Stege 16 in Umfangsrichtung U voneinander beabstandet sind. Somit können die Stege 16, 17 mit dem Radreifen 4 und/oder dem Radkörper 6 verzahnt werden.

Sofern das Federelement 10 nicht segmentiert sondern in Umfangsrichtung U durchgängig ausgebildet ist, können an der mindestens einen Stirnseite 12 und/oder 14 in Umfangsrichtung U mehrere derartige Stege 16 voneinander beanstandet vorgesehen sein. Auch hier ist es möglich, dass an gegenüberliegenden, axialen Stirnseite 12, 14 des Federkörpers 10 in Axialrichtung A des Schienenrads 2 hervorspringende Stege 16 vorgesehen sind. Somit kann das Schienenrad 2 spiegelsymmetrisch zu der Radialebene E ausgestaltet sein.

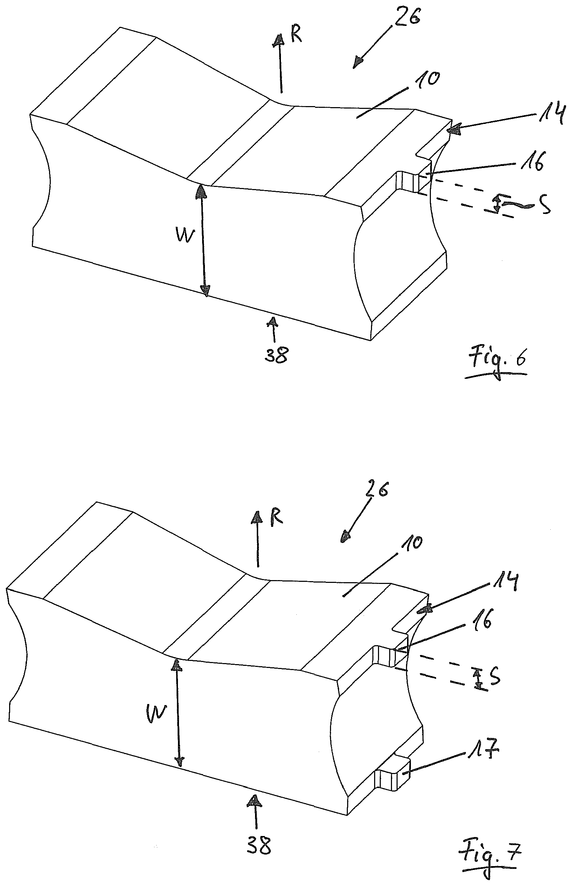

Aus den Fig. 6 und 7 sind zwei weitere Ausgestaltungen für ein Segment 26 des Federkörpers 10 zu entnehmen. Gemeinsam ist den beiden Ausgestaltungen, dass die radial innenseitige Wandung 38 des jeweiligen Segments 26 nicht konvex ausgebildet ist. Vielmehr ist die innenseitige Wandung 38 kreisringabschnittsförmig ausgestaltet. Die Wandung 38 weist also einen konstanten Radius von der Drehachse D des Schienenrads 2 auf.

Die Stege 16, 17 weisen eine geringere radiale Erstreckung S als der übrige Federkörper 10 bzw. das übrige Segment 26 auf. Ein entsprechender Zusammenhang kann vorzugsweise den Fig. 4 bis 7 entnommen werden, in denen jeweils ein Segment 26 des Federkörper 10 dargestellt ist. Mit anderen Worten ist die Radialerstreckung S eines jeden Stegs 16, 17 in Radialrichtung R kleiner als die übrige Wandstärke W des Federkörpers 10 in Radialrichtung R. Die Stege 16, 17 erstrecken sich somit nicht von dem Radkörper 6 bis zu dem Radreifen 4. Sie eignen sich deshalb auch nicht zur Übertragung von Kräften in Radialrichtung R zwischen dem Radkörper 6 und dem Radreifen 4. Das Vorsehen der Stege 16, 17 beeinflusst also nicht das gewünschte Dämpfungsverhalten des Schienenrads 2 in Radialrichtung R.

Damit die Stege 16 zur Übertragung eines Drehmoments um die Drehachse D des Schienenrads 2 zwischen dem Federkörper 6 und dem Radreifen 4 dienen zu können, weist beispielsweise der Radkörper 6 aus der Fig. 3 mindestens einen sich in Radialrichtung R erstreckenden Kragen 18 auf, an dem die Stirnseite 14 des Federkörpers 10, von der die Stege 16 abragen, anliegen. Dabei weist der mindestens eine Kragen 18 an seiner dem Federkörper 10 zugewandten, axialen Stirnseite 20 Nuten 22 auf, in die die Stege 16 fassen, um mit den Nuten 22 eine formschlüssige Verbindung ausbilden. Dazu sind die Nuten 22 jeweils von zwei in Umfangsrichtung U des Schienenrads 2 gegenüber angeordneten Anlageflächen begrenzt, wie es beispielsweise der Fig. 1 entnehmbar ist. Indem ein Steg 16 in eine Nut 22 einfasst, liegt der Steg 16 an den genannten Anlageflächen der Nut 22 an, so dass zwischen dem Steg 16 und der Nut 22 Kräfte in Umfangsrichtung U übertragen werden. Mit anderen Worten kann ein Drehmoment übertragen werden.

### Bezugszeichenliste

### (Teil der Beschreibung)

- A: Axialrichtung
- D: Drehachse
- E: Radialebene
- R: Radialrichtung
- S: Radialerstreckung
- U: Umfangsrichtung
- W: Wandstärke
- 2: Schienenrad
- 4: Radreifen
- 6: Radkörper
- 8: Achsnabe
- 10: Federkörper
- 12: Stirnseite des Federkörpers
- 14: Stirnseite des Federkörpers
- 16: Steg
- 17: Steg
- 18: Kragen
- 20: Stirnseite des Kragen
- 22: Nut
- 24: Anlagefläche
- 26: Segment
- 28: Radfelge
- 30: Radscheibe
- 32: äußere Wandung
- 34: innere Wandung
- 36: Pufferabschnitt
- 38: innere Wandung

## Patentansprüche

1. Schienenrad (2) aufweisend
- einen ringförmigen Radreifen (4),
- einen koaxial zum Radreifen (4) angeordneten, zylindrischen Radkörper (6), der eine Achsnabe (8) aufweist, und
- einen ringförmigen Federkörper (10), der sich in Radialrichtung R des Schienenrads (2) unter einer Vorspannung zwischen dem Radreifen (4) und dem Radkörper (6) erstreckt, um den Radreifen (4) federnd auf dem Radkörper (6) abzustützen,
**dadurch gekennzeichnet, dass**
- der Federkörper (10) an zumindest einer seiner axialen Stirnseiten (12, 14) in Axialrichtung A des Schienenrads (2) hervorspringende Stege (16) aufweist,
- der Radreifen (4) und/oder der Radkörper (6) mindestens einen sich in Radialrichtung R erstreckenden Kragen (18) aufweist, an dem die genannte Stirnseite (12, 14) des Federkörpers anliegt, wobei der oder jeder Kragen (18) an seiner dem Federkörper (10) zugewandten, axialen Stirnseite (20) Nuten (22) aufweist, die jeweils von zwei in Umfangsrichtung U des Schienenrads (2) gegenüber angeordneten Anlageflächen (24) begrenzt sind, und
- die Stege (16) in die Nuten (22) fassen, um eine formschlüssige Verbindung auszubilden.

2. Schienenrad (2) nach dem vorhergehenden Anspruch, **dadurch gekennzeichnet, dass** die Stege (16) einen integralen Teil des Federkörpers (10) bilden.

3. Schienenrad (2) nach einem der vorhergehenden Ansprüche, **dadurch gekennzeichnet, dass** der Federkörper (10) zwischen seinen in Axialrichtung A gegenüber angeordneten Stirnseiten (12, 14) kreisringförmig ausgestaltet ist.

4. Schienenrad (2) nach einem der vorhergehenden Ansprüche, **dadurch gekennzeichnet, dass** die Stege (16) in Umfangsrichtung U des Schienenrads (2) voneinander beabstandet sind.

5. Schienenrad (2) nach einem der vorhergehenden Ansprüche, **dadurch gekennzeichnet, dass** der Federkörper (10) in Umfangsrichtung U des Schienenrads (2) segmentiert ist, wobei jedem Segment (26) des Federkörpers (10) einer der Stege (16) zugeordnet ist.

6. Schienenrad (2) nach einem der vorhergehenden Ansprüche, **dadurch gekennzeichnet, dass** der Federkörper (10) an zwei gegenüber angeordneten, axialen Stirnseiten (12, 14) Stege (16) aufweist, die jeweils in Axialrichtung A des Schienenrads (2) hervorspringen.

7. Schienenrad (2) nach einem der vorhergehenden Ansprüche, **dadurch gekennzeichnet, dass** der Federkörper (10) spiegelsymmetrisch zu einer Radialebene E des Schienenrads (2) ausgestaltet ist.

8. Schienenrad (2) nach einem der vorhergehenden Ansprüche, **dadurch gekennzeichnet, dass** die Stege (16) und die Nuten (22) durch in Umfangsrichtung U unstetige Konturen ausgebildet sind.

9. Schienenrad (2) nach einem der vorhergehenden Ansprüche 1 bis 6, **dadurch gekennzeichnet, dass** die Stege (16) und die Nuten (22) durch in Umfangsrichtung U stetige Konturen ausgebildet sind.

10. Schienenfahrzeug aufweisend ein als Fahrwerk dienendes Gestell mit mindestens einer Achse und daran drehbar gelagerten Schienenrädern (2), **dadurch gekennzeichnet, dass** die Schienenräder (2) jeweils nach einem der vorhergehenden Ansprüche ausgestaltet sind.

## Claims

1. Rail wheel (2) having
- a ring-shaped wheel tyre (4),
- a cylindrical wheel body (6) which is arranged coaxially with respect to the wheel tyre (4) and which has an axle hub (8), and
- a ring-shaped spring body (10) which extends in a radial direction R of the rail wheel (2) under preload between the wheel tyre (4) and the wheel body (6) in order to support the wheel tyre (4) resiliently on the wheel body (6),
**characterized in that**
- the spring body (10) has, on at least one of its axial face sides (12, 14), webs (16) which project in an axial direction A of the rail wheel (2),
- the wheel tyre (4) and/or the wheel body (6) has at least one collar (18) which extends in a radial direction R and against which said face side (12, 14) of the spring body bears, wherein the or each collar (18) has, on its axial face side (20) facing toward the spring body (10), grooves (22) which are each delimited by two contact surfaces (24) which are arranged oppositely in a circumferential direction U of the rail wheel (2), and
- the webs (16) engage into the grooves (22) in order to form a positively locking connection.

2. Rail wheel (2) according to the preceding claim, **characterized in that** the webs (16) form an integral part of the spring body (10).

3. Rail wheel (2) according to one of the preceding claims, **characterized in that** the spring body (10) is of circular-ring-shaped form between its face sides (12, 14) which are arranged oppositely in an axial direction A.

4. Rail wheel (2) according to one of the preceding claims, **characterized in that** the webs (16) are spaced apart from one another in a circumferential direction U of the rail wheel (2).

5. Rail wheel (2) according to one of the preceding claims, **characterized in that** the spring body (10) is segmented in a circumferential direction U of the rail wheel (2), wherein each segment (26) of the spring body (10) is assigned one of the webs (16) .

6. Rail wheel (2) according to one of the preceding claims, **characterized in that** the spring body (10) has webs (16) at two oppositely arranged axial face sides (12, 14), which webs each project in an axial direction A of the rail wheel (2).

7. Rail wheel (2) according to one of the preceding claims, **characterized in that** the spring body (10) is of mirror-symmetrical design with respect to a radial plane E of the rail wheel (2).

8. Rail wheel (2) according to one of the preceding claims, **characterized in that** the webs (16) and the grooves (22) are formed by contours which are discontinuous in a circumferential direction U.

9. Rail wheel (2) according to one of the preceding Claims 1 to 6, **characterized in that** the webs (16) and the grooves (22) are formed by contours which are continuous in a circumferential direction U.

10. Rail vehicle having a bogie which serves as running gear and which has at least one axle and rail wheels (2) rotatably mounted thereon, **characterized in that** the rail wheels (2) are each designed according to one of the preceding claims.

## Revendications

1. Roue pour rail (2), comportant
- un bandage de roue (4) annulaire,
- un corps de roue (6) cylindrique, agencé de façon coaxiale au bandage de roue (4), comportant un moyeu d'essieu (8), et
- un corps élastique (10) annulaire, s'étendant dans la direction radiale R de la roue pour rail (2) sous une tension entre le bandage de roue (4) et le corps de roue (6), afin de soutenir le bandage de roue (4) sur le corps de roue (6) de façon élastique,
**caractérisée en ce que**
- le corps élastique (10) comporte des traverses (16) faisant saillie sur au moins une de ses faces frontales axiales (12, 14) dans la direction axiale A de la roue pour rail (2),
- le bandage de roue (4) et/ou le corps de roue (6) comporte au moins une collerette (18) s'étendant dans la direction radiale R, adjacente à la face frontale axiale (12, 14) nommée du corps élastique, dans laquelle la collerette ou chacune des collerettes (18) comporte des encoches (22) sur sa face frontale axiale (20) faisant face au corps élastique (10), celles-ci étant délimitées respectivement par deux surfaces de contact (24) agencées en opposition dans la direction du pourtour U de la roue pour rail (2), et
- les traverses (16) s'insèrent dans les encoches (22) afin de former une connexion à forme bloquante.

2. Roue pour rail (2) selon la revendication précédente, **caractérisée en ce que** les traverses (16) constituent une partie intégrante du corps élastique (10) .

3. Roue pour rail (2) selon l'une des revendications précédentes, **caractérisée en ce que** le corps élastique (10) est disposé entre ses faces frontales (12, 14) agencées l'une en face de l'autre dans la direction axiale A en forme d'anneau circulaire.

4. Roue pour rail (2) selon l'une des revendications précédentes, **caractérisée en ce que** les traverses (16) sont espacées l'une de l'autre dans la direction du pourtour U de la roue pour rail (2).

5. Roue pour rail (2) selon l'une des revendications précédentes, **caractérisée en ce que** le corps élastique (10) est segmenté dans la direction du pourtour U de la roue pour rail (2), dans laquelle chaque segment (26) du corps élastique (10) est ordonné à une des traverses (16) .

6. Roue pour rail (2) selon l'une des revendications précédentes, **caractérisée en ce que** le corps élastique (10) comporte des traverses (16) sur deux faces frontales axiales (12, 14) agencées l'une en face de l'autre, faisant respectivement saillie dans la direction axiale A de la roue pour rail (2).

7. Roue pour rail (2) selon l'une des revendications précédentes, **caractérisée en ce que** le corps élastique (10) est disposé en symétrie de réflexion par rapport à un plan radial E de la roue pour rail (2).

8. Roue pour rail (2) selon l'une des revendications précédentes, **caractérisée en ce que** les traverses (16) et les encoches (22) sont formées au travers de contours intermittents dans la direction du pourtour U.

9. Roue pour rail (2) selon l'une des revendications précédentes 1 à 6, **caractérisée en ce que** les traverses (16) et les encoches (22) sont formées au travers de contours continus dans la direction du pourtour U.

10. Véhicule ferroviaire comprenant un support servant de châssis doté d'au moins un essieu et de roues de rail (2) disposées pour être en rotation sur celui-ci, **caractérisé en ce que** les roues de rail (2) sont conçues respectivement selon l'une des revendications précédentes.
